# EUROPEAN PATENT SPECIFICATION

(11) **EP 1 553 277 B1**
(45) Date of publication and mention of the grant of the patent: **04.10.2006**
(21) Application number: 04030496.6
(22) Date of filing: 22.12.2004
(51) Int. Cl.: F02D 11/02, F02D 11/10, F02D 9/02, B62K 23/04, B62K 11/14

(54) **Throttle device and vehicle**
Drosselvorrichtung und Fahrzeug
Dispositif d'étranglement et véhicule

(30) Priority: 06.01.2004 JP 2004001283
(43) Date of publication of application: 13.07.2005
(73) Proprietor: YAMAHA HATSUDOKI KABUSHIKI KAISHA, Iwata-shi, Shizuoka-ken (JP)
(72) Inventor: Hayashi, Norio, Iwata-shi Shizuoka-ken (JP)
(74) Representative: Grünecker, Kinkeldey, Stockmair & Schwanhäusser Anwaltssozietät

(56) References cited:
- EP-A- 1 338 500
- EP-A- 1 464 571
- DE-A1- 19 547 408
- US-A- 5 320 076
- US-A- 6 038 923
- US-A- 6 089 535
- US-B1- 6 276 230
- US-B1- 6 396 259

## Description

The present invention relates to a throttle device according to the preamble part of claim 1 and to a vehicle according to the preamble part of claim 9. In particular, the present invention relates to a throttle device, in particular for a vehicle, comprising an operational amount detecting means for detecting an amount of motion of a throttle actuator means and a throttle valve actuating means for actuating a throttle valve based on the detected data. Further, the invention relates to a vehicle, in particular a motorcycle, comprising an engine with a throttle valve and a throttle actuator means, in particular a rotatable throttle grip.

A conventional throttle device for a motorcycle in which a throttle valve is actuated by a motor is described in JP-A-2003-127959, for example. In such a throttle device, an amount of rotary motion of a throttle grip is detected by a potentiometer and the motor is then controlled based on the detected data. The potentiometer is mounted to a switch box on a handlebar and a movable contact piece is rotated together with the throttle grip.

However, mounting the potentiometer to the switch box causes a problem that the switch box becomes larger. Such deficiency can be partially eliminated by incorporation of the potentiometer into the switch box. For employing such a constitution as above, an expensive waterproof construction is required to securely prevent water from entering the switch box because of change in resistance of the potentiometer due to water entering the switch box. Furthermore, it is also a problem that sliding contact portions of both a movable contact piece and an electrode in the potentiometer are apt to wear each other, resulting in poor endurance of the potentiometer.

DE 195 47 408 A1 discloses a handlebar throttle controller, wherein a Hall sensor, comprising a rotational unit and a stationary unit detects a rotation angle of a throttle grip. The rotational unit is connected to the throttle grip and is provided with a magnet. A sensor signal obtained by the Hall sensor is delivered to a central control unit which calculates an opening degree required for a throttle and operates a throttle actuator accordingly.

US 6 276 230 B1 also discloses a handlebar throttle controller with a Hall sensor.

US 6 396 259 B1 and US 5 320 076 disclose different sensors for detecting an operating degree of an accelerator pedal.

It is an objective of the present invention to provide an improved throttle device which is more reliable, in particular, in the state of aging, as well as an accordingly improved vehicle.

For a throttle device, said objective is solved according to present invention by a throttle device comprising the features of claim 1.

For a vehicle, the aforementioned objective is solved by a vehicle comprising the features of claim 9.

Preferably, the magnetic force detected by the Hall sensor is gradually reduced as a throttle valve opening is increased.

Furthermore, preferably the throttle actuator means is a throttle grip, in particular being rotatable with respect to a switch box, comprising the operational amount detecting means and/or in that the throttle valve actuating means comprises an electric motor.

Still further, preferably at least two Hall sensors are provided for detecting the motion of the throttle actuator means, wherein the two Hall sensors are preferably positioned at two adjacent sides of an imaginary rectangle within which a magnetic source, in particular a permanent magnet, connected to the throttle actuator means is movably, in particular rotatably, positioned.

Moreover, preferably the Hall sensor is supported by a switch box located in the proximity to the throttle grip, and/or in that a permanent magnet of which magnetic force is to be detected by the Hall sensor is mounted to the throttle grip, and/or in that the throttle grip is biased with the magnetic force of the permanent magnet, and/or an elastic force source in the direction of closing the throttle valve.

Also, preferably a control means is provided, comprising a throttle valve control means and/or an injector control means.

According to a preferred embodiment, at least one of the Hall sensors, which are preferably positioned on a common circuit board, and the permanent magnet, and a return spring are arranged in a common plane.

According to a further preferred embodiment, an abnormality detection device is provided, capable of detecting an abnormal position of a magnetic source to be recognized by the Hall element and capable of displaying an alarm signal.

Such deficiencies as mentioned above, like entering water and wear, can be eliminated by substituting a non-contact Hall sensor for the potentiometer. The contactless Hall sensor is preferably of a type for detecting a magnetic force of a magnet mounted to an object for detection. As described below, according to a preferred embodiment, it is possible to overcome the general problem of Hall elements that an accuracy for detection is apt to be lowered by an affect of disturbance (external magnetic field). It is, therefore, possible to provide a throttle device preventing the affect of disturbance and having a simple and compact configuration having a Hall sensor.

In particular, it is difficult for any disturbance to affect on, because the magnetic force to be detected with the Hall sensor is relatively large when the throttle valve opening is relatively narrow. The throttle valve opening at a vehicle stoppage, including at a low speed running, can be therefore controlled precisely. On the other hand, since the magnetic force is reduced at a high speed running, the disturbance is apt to affect on. However, at this time, even if the throttle valve opening is fluctuated due to the disturbance then the change of the running state could be very small enough to be negligible, since the vehicle speed is high.

Thus, a throttle device having a compact and simple construction can be provided using a Hall sensor.

Even if the magnetic force is reduced due to aging thereof, the throttle valve is always brought in its fully closed position by positioning the throttle grip in its throttle fully closing position. Thus, the throttle valve opening controlled by the throttle grip can be always detected accurately since the reduction of the magnetic force due to aging can be offset.

Furthermore, the throttle grip is always biased in the closing direction by the magnetic force of the magnet which is detected with the Hall sensor. Therefore, a return spring in the throttle grip can be assisted by the magnetic force and returned to its initial position securely.

In the following, the invention will be described in greater detail by means of a preferred embodiment thereof with reference to the attached drawings, wherein:
- FIG. 1: is a block diagram, showing a configuration of a throttle device;
- FIG. 2: is a rear view, showing a throttle grip and a switch box; and
- FIG. 3: is a side elevational view, showing the switch box, where a base of the throttle grip is cut away.

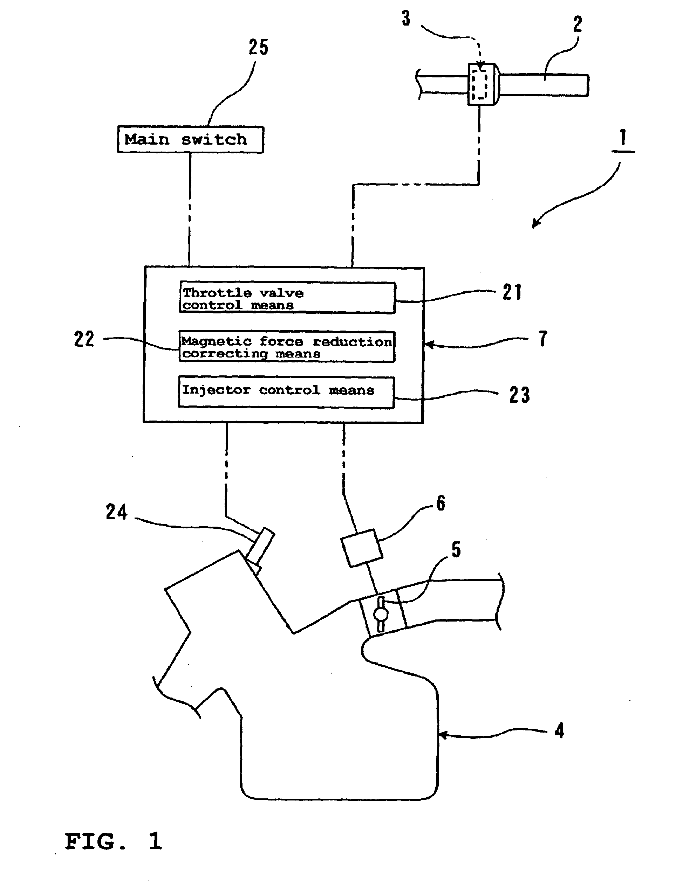

An embodiment of a throttle device is described hereinafter, with reference to FIG. 1 to FIG.3.

In those figures, reference numeral 1 denotes a throttle device for a motorcycle of this embodiment. The throttle device 1 is constituted with an operational amount detecting means 3 for detecting an operational amount of a throttle grip 2, a motor 6 for actuating a throttle valve 5 of an engine 4, and a controller 7for controlling the motor 6 based on the detection result from the operational amount detecting means 3.

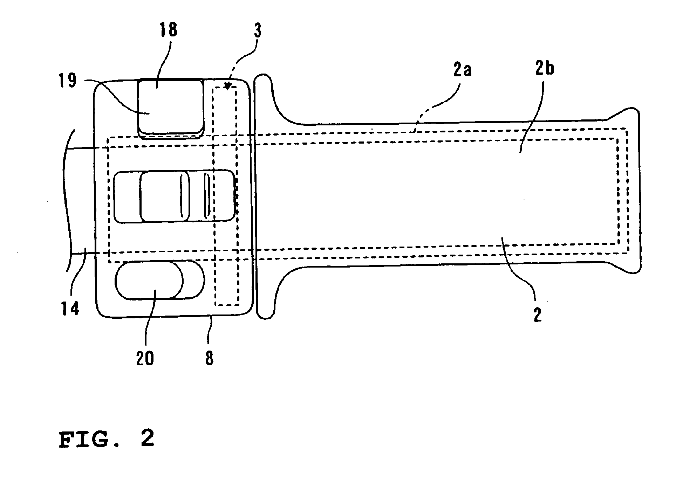

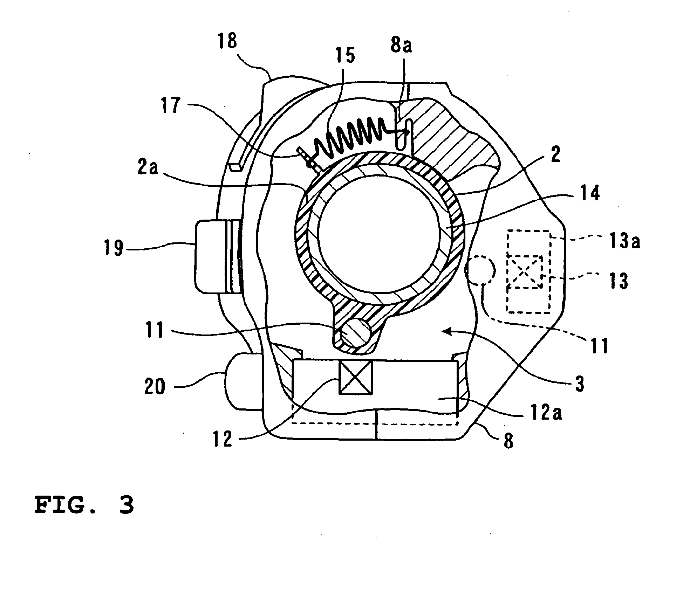

As shown in FIGs. 2 and 3, the operational amount detecting means 3 is mounted inside of a switch box 8 located in the proximity of the throttle grip 2 and is constituted with a permanent magnet 11 rotating together with the throttle grip 2, a first and a second Hall sensor 12, 13 for detecting a magnet force of the permanent magnet 11, printed wiring boards 12a, 13a on which the Hall sensors 12, 13 are mounted, and others.

The throttle grip 2 is constituted with a support tube 2a that is made of synthetic resin and rotationally supported at one end of the handlebars 14 on the right side of the vehicle body, and a grip rubber 2b that is fixed around an outer face of the support tube 2a. The other end of the support tube 2a closer to the vehicle body, or the base end (the left end as shown in FIG. 2), is faced the inside of the switch box 8. In this base end is embedded the permanent magnet 11.

The permanent magnet 11 is disposed so as to be brought into a position below the handle bar 14 when the throttle grip 2 is in its initial position where the throttle valve 5 is fully closed. The position of the permanent magnet 11 when the throttle grip 2 is rotated to fully open the throttle valve 5 is shown by a phantom line in FIG.3.

On the top side of the throttle grip 2 opposite to the permanent magnet 11 is disposed an extension return spring 15 for biasing the throttle grip 2 in the direction of opening the throttle valve (clockwise direction in FIG. 3). This extension spring 15 has one end that is connected with a pin 17 projected from the throttle grip 2 and the other end that is connected with the switch box 8.

The switch box 8, as has been conventionally well known, is formed of aluminium alloy and has various switches 18-20 mounted so as to face rearward of the vehicle body.

The printed circuit board 12a is attached in a lower portion of the switch box 8, below the permanent magnet 11, while the printed circuit board 13a is also attached in the front portion of the switch box 8. In this embodiment, the printed circuit boards 12a, 13a, the permanent magnet 11 and a return mechanism including the extension return spring 15 are arranged to be disposed in a common plane normal to the axis of the throttle grip 2.

The printed circuit boards 12a and 13a employ a circuit, respectively, in which A/D converters (not shown) convert analog data output from the first and second Hall sensors 12 and 13 into digital data and the data detected by the first and second Hall sensors 12 and 13 are sent to a controller 7, which will be described hereinafter.

The first Hall sensor 12 is disposed so as to position below and near the permanent magnet 11 when the throttle grip 2 is brought into the initial position where the throttle opening is fully closed. In other words, the magnetic force to be detected by the first Hall sensor 12 is the largest when the throttle grip 2 is brought into the initial position where the throttle opening is fully closed, and will become smaller gradually as the throttle grip 2 is rotated in the direction of opening the throttle valve 5 to increase the distance between the permanent magnet 11 and the Hall sensor 12.

Further, a magnetic body (not shown) is located in the proximity of the Hall sensor 12. In the throttle device 1, action of the permanent magnet 11 on the magnetic body causes the throttle grip 2 to be biased in the direction of the magnetic body (in the direction of closing the throttle valve).

The second Hall sensor 13 is disposed so as to position near and in front of the permanent magnet 11 when the throttle grip 2 is rotated to fully open the throttle valve. In other words, the magnetic force to be detected by the second Hall sensor 13 is the largest when the throttle grip 2 is brought into a position where the throttle valve 5 is fully opened, and will become smaller gradually as the throttle grip 2 is rotated toward the initial position to increase the distance between the permanent magnet 11 and the second Hall sensor 13.

The controller 7 includes, as shown in FIG. 1, a throttle valve control means 21, a magnetic force reduction correcting means 22, and an injector control means 23, for controlling injectors 24 of an engine 4, as well as a throttle valve actuating motor 6. Upon turning on the main switch 25, the controller 7 commences its control operation.

A circuit is employed for the throttle valve control means 21 to control the throttle valve actuating motor 6 in association with the magnetic force detected with the first Hall sensor 12. More specifically, the motor 6 is controlled by the throttle valve control means 21 in a way that the throttle valve opening is increased as the magnetic force detected by the first Hall sensor 12 is reduced, since the magnetic force detected by the first Hall sensor 12 reaches the largest when the throttle grip 2 is in the initial position, and the more the amount of operation with the throttle grip 2, the smaller the magnetic force.

Also, the throttle valve control means 21 determines whether or not the magnetic force detected by the first Hall sensor 12 and the another magnetic force detected by the second Hall sensor 13 are changed always in a relationship as per a rule, for detecting any abnormality, based on the change in those magnetic forces. In normal condition, if the magnetic force detected by the first Hall sensor 12 reduces then the magnetic force detected by the second Hall sensor 13 increases. Depending on a criterion of the rule in association with the change in the magnetic force, the throttle valve control means 21 can check for abnormality. In a case that the permanent magnet 11 comes off the support tube 2a due to some reason, the permanent magnet 11 may leave the first Hall sensor 12 in spite of no throttle operation. Under this circumstance, the throttle valve control means 21 decides that the present state is abnormal since there is no change in the magnetic force detected by the second Hall sensor 13. In this abnormal state, the throttle valve control means 21 displays an alarm (not shown) and stops the engine.

Even if the magnetic force of the permanent magnet 11 has been lowered due to aging, the magnetic force reduction correcting means 22 compensates so that the throttle valve 5 is fully closed whenever the throttle grip 2 is returned to its initial position. The magnetic force reduction correcting means 22 employs a circuit for setting, as the largest magnetic force, that is, the magnetic force to be detected when the throttle valve 5 is fully closed, a magnetic value detected by the Hall sensor 12 upon turning on the main switch 25 (at this time, provided that the throttle grip 2 is located in the initial position).

The injector control means 23 is constituted to control the amount of injection fuel from each injector 24 based on the throttle valve opening and engine speed.

According to the throttle device 1 for a motorcycle, as constituted above, the magnetic force detected by the first Hall sensor 12 upon turning on the main switch 25 is decided as the largest magnetic force. Detection of the largest magnetic force as described using the first Hall sensor 12 during operation of the engine forces the throttle valve to fully close and the throttle valve opening is increased gradually as the magnetic force detected by the first Hall sensor 12 is lowered.

Accordingly, in a state of relatively small throttle valve opening, since the magnetic force detected by the first Hall sensor 12 is relatively large, affection of disturbance can be suppressed as far as possible. Therefore, the throttle valve opening at a low speed running, including its running stop, can be controlled precisely. On the other hand, at a high speed running it is apt to be subject to disturbance. However, in this state, the vehicle runs at a high speed and therefore a change of the running state is a little enough to ignore even if the throttle opening is changed by disturbance.

Also, there is provided a magnetic force reduction correcting means 22 for obtaining, each time of operating a main switch 25 to turn on, a detection value from the first Hall sensor 12 when the throttle grip 2 is in a fully closed position thereof, and determining the detection value as the largest value of the magnetic force. Thus, even if the magnetic force of the permanent magnet 11 has been lowered due to aging, the throttle valve 5 is fully closed whenever the throttle grip 2 is forced to position at the throttle valve fully closing position. Thus, the reduction of the magnetic force due to aging can be offset to improve reliability of the throttle device 1.

A constitution is employed in which the first Hall sensor 12 is supported by a switch box 8 located in proximity to the throttle grip 2, a permanent magnet 11 of which magnetic force is to be detected by the first Hall sensor 12 is mounted to the throttle grip 2, and the throttle grip 2 is biased with the magnetic force of the permanent magnet 11 in the direction of the throttle valve to be fully closed. The magnetic force of the permanent magnet 11 assists the biasing force of the extension return spring 15. In this embodiment, the weight of the permanent magnet 11 is added to the biasing force in the direction of closing the throttle valve, since the permanent magnet 11 is disposed so as to be brought into the lowest position when the throttle grip 2 is in its initial position.

Additionally, in this embodiment, since the printed circuit boards 12a, 13a having the first and second Hall sensors 12,13, the permanent magnet 11 and the return mechanism including the extension return spring 15 are arranged in a common plane, the size of the switch box 8 can be reduced along its axial direction.

In the embodiment described, an example of increasing the throttle valve opening with the reduction of the magnetic force detected by the first Hall sensor 12 is described. The throttle opening may be set using a map (not shown), in which the throttle valve openings are set in association with the magnetic forces, respectively, in advance. By use of the map, for example, different increase and decrease of the throttle valve opening per unit of rotational angle of the throttle valve 2 can be applied for the narrower opening and wider opening, respectively to increase the resolution at the throttle grip 2 at a low speed running.

Also, in the embodiment above, the second Hall sensor 13 does not interfere the various switches 18-20 disposed in the rear of the switch box 8, because the second Hall sensor 13 is disposed in the front portion of the switch box 8, as seen in the longitudinal direction of the vehicle body. The second Hall sensor 13 for detecting abnormality can be provided while realizing size reduction of the switch box 8.

The above description discloses a throttle device of a vehicle for detecting an amount of rotary motion of a throttle grip by a Hall sensor and actuating a throttle valve by a motor based on the detected data, wherein a magnetic force to be detected by the Hall sensor is defined to be the largest when the throttle grip is positioned in a throttle fully closing position thereof and the magnetic force is gradually reduced as a throttle valve opening is increased.

The throttle device of a vehicle preferably further comprises a magnetic force reduction correcting means for obtaining, each time of operating a main switch to turn on, a detection value from the Hall sensor when the throttle grip is in a fully closed position thereof, and determining the detection value as the largest value of the magnetic force.

Therein, preferably the Hall sensor is supported by a switch box located in the proximity to the throttle grip, a permanent magnet of which magnetic force is to be detected by the Hall sensor is mounted to the throttle grip, and the throttle grip is biased with the magnetic force of the permanent magnet in the direction of closing the throttle valve.

As described above, in order to constitute a throttle device of a vehicle having a compact structure using a Hall sensor without affect from disturbance, it is proposed that a magnet force detected by the Hall sensor 12 when the throttle grip 2 is positioned in a throttle valve fully closing position is defined as the largest magnetic force. Additionally, the magnetic force is gradually reduced with the increase of the throttle valve opening.

## Claims

1. Throttle device, in particular for a vehicle, comprising an operational amount detecting means (3) for detecting an amount of motion of a throttle actuator means (2) and a throttle valve actuating means (6) for actuating a throttle valve (5) based on the detected data, the operational amount detecting means (3) comprising a Hall sensor (12,13),
**characterized by** further comprising a magnetic force reduction correcting means (22) configured to obtain, each time of operating a switch, in particular a main switch (25) to turn on, a detection value from the Hall sensor (12,13) when the throttle actuator means (2) is in a fully closed position thereof, and determining the detection value as the largest value of the magnetic force to be detected by the Hall sensor (12,13).

2. Throttle device according to claim 1, **characterized in that** the magnetic force detected by the Hall sensor (12,13) is gradually reduced as a throttle valve opening is increased.

3. Throttle device according to claims 1 or 2, **characterized in that** the throttle actuator means (2) is a throttle grip, in particular being rotatable with respect to a switch box (8), comprising the operational amount detecting means (3) and/or **in that** the throttle valve actuating means (6) comprises an electric motor (6).

4. Throttle device according to at least one of the claims 1 to 3, **characterized in that** at least two Hall sensors (12,13) are provided for detecting the motion of the throttle actuator means (2), wherein the two Hall sensors (12,13) are preferably positioned at two adjacent sides of an imaginary rectangle within which a magnetic source, in particular a permanent magnet (11), connected to the throttle actuator means (2) is movably, in particular rotatably, positioned.

5. Throttle device according to at least one of the claims 1 to 4, **characterized in that** the Hall sensor (12,13) is supported by a switch box (8) located in the proximity to the throttle grip (2), and/or **in that** a permanent magnet (11) of which magnetic force is to be detected by the Hall sensor (12,13) is mounted to the throttle grip (2), and/or **in that** the throttle grip (2) is biased with the magnetic force of the permanent magnet (11), and/or an elastic force source (15) in the direction of closing the throttle valve (5).

6. Throttle device according to at least one of the claims 1 to 5, **characterized in that** a control means (7) is provided, comprising a throttle valve control means (21) and/or an injector control means (23).

7. Throttle device according to at least one of the claims 4 to 6, **characterized in that** at least one of the Hall sensors (12,13), which are preferably positioned on a common circuit board, and the permanent magnet (11), and a return spring (15) are arranged in a common plane.

8. Throttle device according to at least one of the claims 1 to 7, **characterized in that** an abnormality detection device is provided, capable of detecting an abnormal position of a magnetic source to be recognized by the Hall sensor (12,13) and capable of displaying an alarm signal.

9. Vehicle, in particular a motorcycle, comprising an engine (4) with a throttle valve (5) and a throttle actuator means (2), in particular a rotatable throttle grip, **characterized in that** a throttle device (1) according to at least one of the claims 1 to 8 is provided for detecting an amount of motion of the throttle actuator means (2) and for actuating the throttle valve (5).

## Patentansprüche

1. Drosselvorrichtung, insbesondere für ein Fahrzeug, aufweisend eine Betätigungsbetrag- Erfassungseinrichtung (3) zum Erfassen eines Bewegungsbetrages einer Drosselbetätigungseinrichtung (2) und einer Drosselventil- Betätigungseinrichtung (6) zum Betätigen eines Drosselventils (5) auf der Grundlage der erfassten Daten, wobei die Betätigungsbetrag- Erfassungseinrichtung (3) einen Hall-Sensor (12, 13) aufweist,
**gekennzeichnet durch** weiter aufweisend eine Magnetkraft- Reduzierungs- Korrektureinrichtung (22), konfiguriert um jedes Mal beim Betätigen eines Schalters, insbesondere eines Hauptschalters (25), beim Einschalten, einen Erfassungswert von dem Hall- Sensor (12, 13) zu erhalten, wenn die Drosselbetätigungseinrichtung (2) in ihrer vollständig geschlossenen Position ist, und um den Erfassungswert als den größten Wert der **durch** den Hall- Sensor (12, 13) zu erfassenden Magnetkraft zu bestimmen.

2. Drosselvorrichtung nach Anspruch 1, **dadurch gekennzeichnet, dass** die durch den Hall- Sensor (12, 13) erfasste Magnetkraft allmählich reduziert wird, wie eine Drosselventilöffnung erhöht wird.

3. Drosselvorrichtung nach Anspruch 1 oder 2, **dadurch gekennzeichnet, dass** die Drosselbetätigungseinrichtung (2) ein Drosselgriff ist, der insbesondere in Bezug auf einen Schaltkasten (8) drehbar ist, aufweisend die Betätigungsbetrag- Erfassungseinrichtung (3) und / oder **dadurch**, dass die Drosselbetätigungseinrichtung (2) einen Elektromotor (6) aufweist.

4. Drosselvorrichtung nach zumindest einem der Ansprüche 1 bis 3, **dadurch gekennzeichnet, dass** zumindest zwei Hall- Sensoren (12, 13) zum Erfassen der Bewegung der Drosselbetätigungseinrichtung (2) vorgesehen sind, wobei die zwei Hall- Sensoren (12, 13) vorzugsweise auf zwei benachbarten Seiten eines imaginären Rechtecks positioniert sind, innerhalb dessen eine Magnetquelle , insbesondere ein Permanentmagnet (11), verbunden mit einer Drosselbetätigungseinrichtung (2), bewegbar, insbesondere drehbar, positioniert ist.

5. Drosselvorrichtung nach zumindest einem der Ansprüche 1 bis 4, **dadurch gekennzeichnet, dass** der Hall- Sensor (12, 13) durch einen Schaltkasten (8), angeordnet in der Nähe des Drosselgriffs (2), gelagert ist, und / oder **dadurch**, dass ein Permanentmagnet (11), dessen Magnetkraft durch den Hall- Sensor (12, 13) erfasst werden soll, in dem Drosselgriff (2) montiert ist, und / oder **dadurch**, dass der Drosselgriff (2) mit der Magnetkraft des Permanentmagneten (11), und / oder einer elastischen Quelle (15) in einer Schließrichtung des Drosselventils (5) vorgespannt ist.

6. Drosselvorrichtung nach zumindest einem der Ansprüche 1 bis 5, **dadurch gekennzeichnet, dass** eine Steuerungseinrichtung (7) vorgesehen ist, die eine Drosselventil- Steuerungseinrichtung (21) und / oder eine Einspritzeinrichtungs-Steuerungseinrichtung (23) aufweist.

7. Drosselvorrichtung nach zumindest einem der Ansprüche 4 bis 6, **dadurch gekennzeichnet, dass** zumindest einer der Hall- Sensoren (12, 13), die vorzugsweise auf einer gemeinsamen Leiterplatte positioniert sind, und der Permanentmagnet (11) und eine Rückstellfeder (15) in einer gemeinsamen Ebene angeordnet sind.

8. Drosselvorrichtung nach zumindest einem der Ansprüche 1 bis 7, **dadurch gekennzeichnet, dass** eine Abnormalitäts- Erfassungsvorrichtung vorgesehen ist, die in der Lage ist, eine abnormale Position einer durch den Hall- Sensor (12, 13) wahrzunehmenden Magnetquelle zu erfassen, und in der Lage ist, ein Alarmsignal anzuzeigen.

9. Fahrzeug, insbesondere ein Motorfahrzeug, mit einem Motor (4), mit einem Drosselventil (5) und einer Drosselbetätigungseinrichtung (2), insbesondere einem drehbaren Drosselgriff, **dadurch gekennzeichnet, dass** eine Drosselvorrichtung (1) nach zumindest einem der Ansprüche 1 bis 8 für das Erfassen eines Bewegungsbetrages der Drosselbetätigungseinrichtung (2) und für die Betätigung des Drosselventils (5) vorgesehen ist.

## Revendications

1. Dispositif d'étranglement, destiné en particulier à un véhicule, comprenant des moyens de détection de valeurs de fonctionnement (3) destinés à détecter une valeur de mouvement de moyens de commande de dispositif d'étranglement (2) et des moyens de commande de papillon des gaz (6) destinés à commander un papillon des gaz (5) sur la base des données détectées, les moyens de détection de valeurs de fonctionnement (3) comprenant un capteur de Hall (12, 13),
**caractérisé en ce qu'**il comprend en outre des moyens de correction de réduction de force magnétique (22) configurés de manière à obtenir, à chaque actionnement d'un commutateur, en particulier à chaque ouverture d'un commutateur principal (25), une valeur de détection en provenance du capteur de Hall (12, 13) lorsque les moyens de commande de dispositif d'étranglement (2) sont en position totalement fermée, et déterminant la valeur de détection en tant que valeur la plus élevée de la force magnétique devant être détectée par le capteur de Hall (12, 13).

2. Dispositif d'étranglement selon la revendication 1, **caractérisé en ce que** la force magnétique détectée par le capteur de Hall (12, 13) se réduit progressivement au fur et à mesure que l'ouverture du papillon des gaz augmente.

3. Dispositif d'étranglement selon les revendications 1 ou 2, **caractérisé en ce que** les moyens de commande de dispositif d'étranglement (2) sont une poignée des gaz, pouvant tourner en particulier par rapport à un boîtier de commutation (8), comprenant les moyens de détection de valeurs de fonctionnement (3) et / ou **en ce que** les moyens de commande de papillon des gaz (6) comprennent un moteur électrique (6).

4. Dispositif d'étranglement selon au moins l'une des revendications 1 à 3, **caractérisé en ce qu'**au moins deux capteurs de Hall (12, 13) sont fournis afin de détecter le mouvement des moyens de commande de dispositif d'étranglement (2), dans lequel les deux capteurs de Hall (12, 13) sont positionnés de préférence sur deux côtés adjacents d'un rectangle imaginaire à l'intérieur duquel une source magnétique, en particulier un aimant permanent (11), connectée aux moyens de commande de dispositif d'étranglement (2), est positionnée de manière mobile, en particulier en rotation.

5. Dispositif d'étranglement selon au moins l'une des revendications 1 à 4, **caractérisé en ce que** le capteur de Hall (12, 13) est supporté par un boîtier de commutation (8) situé à proximité de la poignée des gaz (2), et / ou **en ce qu'**un aimant permanent (11) dont une force magnétique doit être détectée par le capteur de Hall (12, 13) est monté sur la poignée des gaz (2), et / ou **en ce que** la poignée des gaz (2) est décalée par la force magnétique de l'aimant permanent (11), et / ou par une source de force élastique (15) dans la direction de la fermeture du papillon des gaz (5).

6. Dispositif d'étranglement selon au moins l'une des revendications 1 à 5, **caractérisé en ce qu'**il est fourni des moyens de commande (7) comprenant des moyens de commande de papillon des gaz (21) et / ou des moyens de commande d'injecteur (23).

7. Dispositif d'étranglement selon au moins l'une des revendications 4 à 6, **caractérisé en ce qu'**au moins l'un des capteurs de Hall (12, 13), qui sont positionnés de préférence sur une carte imprimée commune, et l'aimant permanent (11), et un ressort de rappel (15) sont aménagés dans un plan commun.

8. Dispositif d'étranglement selon au moins l'une des revendications 1 à 7, **caractérisé en ce qu'**il est fourni un dispositif de détection d'anormalité capable de détecter une position anormale d'une source magnétique devant être reconnue par le capteur de Hall (12, 13) et capable de fournir un signal d'alarme.

9. Véhicule, en particulier un motocycle, comprenant un moteur (4) comportant un papillon des gaz (5) et des moyens de commande de dispositif d'étranglement (2), en particulier une poignée des gaz pouvant tourner, **caractérisé en ce qu'**un dispositif d'étranglement (1) selon au moins l'une des revendications 1 à 8 est fourni afin de détecter une valeur de mouvement des moyens de commande de dispositif d'étranglement (2) et de commander le papillon des gaz (5).
